# EUROPEAN PATENT SPECIFICATION

(11) **EP 1 860 289 B1**
(45) Date of publication and mention of the grant of the patent: **11.07.2012**
(21) Application number: 07106118.8
(22) Date of filing: 13.04.2007
(51) Int. Cl.: F01M 11/03, F01M 1/02, F16N 31/00

(54) **Oil Passage Structure of Internal Combustion Engine**
Öldurchflussstruktur eines Verbrennungsmotors
Structure de passage d'huile pour moteur à combustion interne

(30) Priority: 26.05.2006 JP 2006146883
(43) Date of publication of application: 28.11.2007
(73) Proprietor: HONDA MOTOR CO., LTD., Minato-ku, Tokyo 107-8556 (JP)
(72) Inventor: Tanaka, Hiroyuki, Saitama 351-0193 (JP); Miyake, Yutaka, Saitama 351-0193 (JP)
(74) Representative: Rupp, Christian

(56) References cited:
- EP-A1- 1 445 436
- EP-A2- 1 164 262
- JP-A- 2000 073 766
- JP-A- 2003 065 023
- US-A- 5 509 381
- US-A- 5 771 854
- US-A1- 2003 121 490
- US-A1- 2004 112 324

## Description

This invention relates to an oil passage structure of an internal combustion engine, which is suitable for an engine of a vehicle such as a motorcycle.

Heretofore, in the above-described engine, engine oil is supplied to the respective portions of the engine by an oil pump driven following rotation of a crankshaft (for example, refer to Patent Document 1). The oil discharged from the oil pump turns around in a casing, and is then ejected toward an oil inlet of an oil filter.
[Patent Document 1] Japanese Utility Model Application Laid-Open Publication No. Sho 62-715

However, in the above-described conventional configuration, a length of an oil passage from the oil pump to the oil filter is long, and a shape of the oil passage becomes complicated. Accordingly, there is a problem that a resistance of the passage is increased, causing a reduction of a flow rate of the oil.

EP 1 445 436 A1 shows an oil passage structure according to the preamble of claim 1. US 2003/0121490 A1 shows a lubricating oil supply structure for an internal combustion engine having a feed pump which discharges lubricating oil under pressure from an outlet port thereof. The discharged lubricating oil passes successively through an oil filter and the lubricating oil passages system, and is supplied to a lubricating oil passage. The discharged lubricating oil is then metered by orifices and continuously ejected from first and second nozzles.

In this connection, this invention provides an oil passage structure of an internal combustion engine, which is capable of suppressing the length of the oil passage from the oil pump to the oil filter, and capable of simplifying the shape of the oil passage.

As means for solving the above-described problem, a first aspect of this invention is an oil passage structure of an internal combustion engine (for example, en engine E of an embodiment), the oil passage structure including: a crankcase (for example, a crankcase 21 of the embodiment) that supports a crankshaft (for example, a crankshaft 31 of the embodiment); a crankcase cover (for example, a right case cover 21c of the embodiment) that covers a side of the crankshaft; an oil pump (for example, an oil pump 71 of the embodiment) that supplies oil to respective portions of the engine; and an oil filter (for example, an oil filter 62 of the embodiment) that includes an oil inflow port (for example, oil inflow ports 66b of the embodiment) and an oil outflow port (for example, an oil outflow port 66a of the embodiment) on the same side. In the oil passage structure, the oil filter is attached to the engine so that the oil inflow port of the oil filter can be opposed to an oil ejection port (for example, an oil ejection port 75 of the embodiment) of the oil pump.
Further, a relief passage (for example, a relief passage 92 of the embodiment) that opens toward the oil inflow port and reaches a relief valve (for example, a relief valve 91 of the embodiment) is provided in the crankcase cover, and an oil jet port (for example, an oil jet port 93 of the embodiment) that jets the oil toward a generator (for example, a generator 47 of the embodiment) disposed inside the crankcase cover is provided between the oil pump and the relief valve in the relief passage.

In a second aspect of this invention, a drive shaft (for example, a drive shaft 72 of the embodiment) of the oil pump is directly coupled to the crankshaft.

In a third aspect of this invention, the oil passage structure further includes an oil pump cover (for example, a pump cover 21d of the embodiment) that covers the oil pump. that the oil passage structure includes a protection wall (for example, a protection wall 78 of the embodiment) that projects so as to cover at least an outer circumference of a lower portion of the oil filter is provided on the oil pump cover.

According to the first aspect of this invention, an oil passage from the oil ejection port of the oil pump to the oil inflow port of the oil filter is linearly formed, whereby the length of the oil passage is suppressed. In such a way, the resistance of the passage is reduced, thus making it possible to increase the flow rate of the oil. Moreover, since the shape of the oil passage is simplified, it is possible to reduce the number of man-hours for processing the parts.
Further, a distance from the oil pump to the oil jet port is suppressed. In addition, the oil jet port is provided on an upstream side of the relief valve, whereby a high oil pressure can be applied to the oil jet port, thus making it possible to jet the oil effectively toward the generator.

According to the second aspect of this invention, the oil pump can be directly driven by the crankshaft, thus making it possible to obtain a higher oil pressure.

According to the third aspect of this invention, the oil filter can be protected from splashes of mud, water, and the like from the ground, and the oil can be prevented from dripping on the ground and the like when the oil filter is attached to or detached from the pump cover.
Fig. 1 is a left side view of a motorcycle in an embodiment of this invention.
Fig. 2 is a left side view of a periphery of an engine in a power unit of the motorcycle.
Fig. 3 is a plan view of a periphery of the power unit.
Fig. 4 is a developed cross-sectional view of the engine is a perspective view of the periphery of the power unit when viewed from right rearward.
Fig. 6 is a left side view of peripheries of an upper portion of a cylinder and an intake passage in the engine.
Fig. 7 is a right side view of a pump cover of the engine.
Fig. 8 is a cross-sectional view taken along a line A-A of Fig. 7.
Fig. 9 is a plan view showing an oil passage of the engine.
Fig. 10 is a left side view of a right case half of a crankcase of the engine.
Fig. 11 is a cross-sectional view taken along a line A-A of Fig. 10.
Fig. 12 is a cross-sectional view taken along a line B-B of Fig. 10.
Fig. 13 is a left side view of a right case cover of the engine.
Fig. 14 is a cross-sectional view taken along a line A-A of Fig. 13.
Fig. 15 is a cross-sectional view taken along a line B-B of Fig. 13.
Fig. 16 is a left side view of a left case half of the crankcase and a left case half of a transmission case in the engine.
Fig. 17 is a cross-sectional view taken along a line A-A of Fig. 16.
Fig. 18 is a view on arrow of a cylinder block of the engine when viewed from the crankcase side.
Fig. 19 is a view on arrow of a cylinder head of the engine when viewed from the crankcase side.

A description will be made below of an embodiment of this invention with reference to the drawings. Note that orientations such as fore and aft and left and right in the following description are defined to be the same as orientations in a vehicle unless otherwise particularly described. Moreover, an arrow FR in the drawings denotes a front side of the vehicle, an arrow LH in the drawings denotes a left side of the vehicle, and an arrow UP in the drawings denotes an upper side of the vehicle.

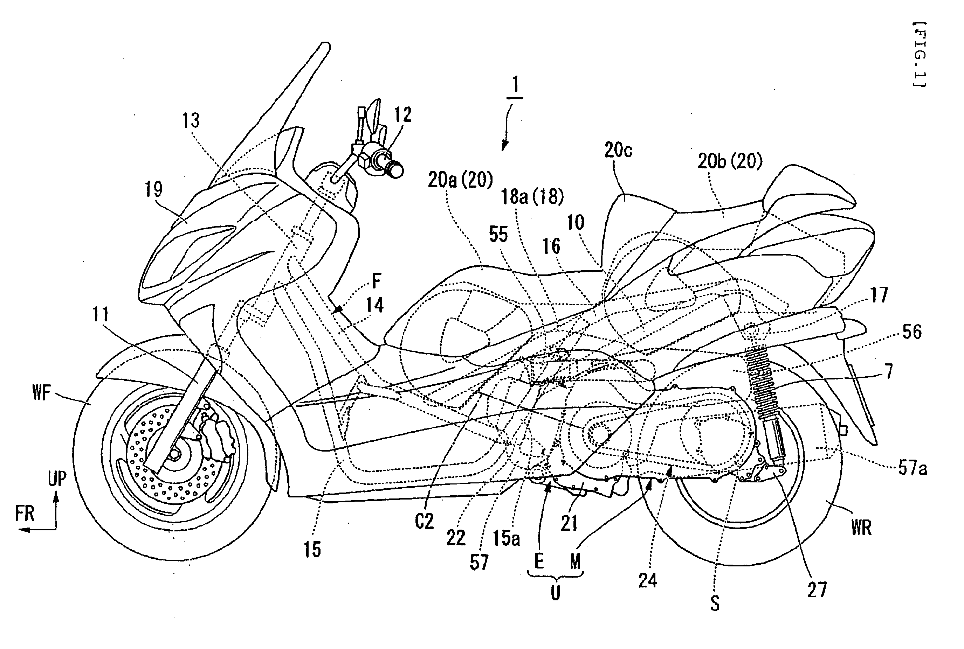

In a scooter-type motorcycle 1 as a low-floor vehicle shown in FIG. 1, a vehicle body frame F includes a head pipe 13 on a front end portion thereof, and on this head pipe 13, a steering handle 12 and a front fork 11 that axially supports a front wheel WF are steerably supported. Moreover, below a rear portion of the vehicle body frame F, an integrated swing power unit (hereinafter, referred to as a power unit) U is disposed, in which an engine E as a motor of the motorcycle 1 is disposed in a front portion, and an axle S of a rear wheel WR as a drive wheel is disposed in a rear portion.

A front upper side of the power unit U is supported in a vertically swingable manner on the rear portion of the vehicle body frame F with a suspension link (not shown) interposed therebetween. Meanwhile, a rear end portion of the power unit U is supported on a rear end portion of the vehicle body frame F with rear cushions 7 as shock absorbers interposed therebetween. The power unit U as described above is vertically swingable together with the rear wheel WR around the suspension link as a pivot, and composes a rear suspension of a so-called unit swing type.

The vehicle body frame F includes a left and right pair of upper down frames 14 extended downward toward a rear from the head pipe 13, and a left and right pair of lower down frames 15 extended below the upper down frames 14 downward toward the rear from the head pipe 13, and then bent and extended toward the rear. Rear portions of the lower down frames 15 are defined as rear inclined portions 15a bent and extended upward toward the rear, and rear ends of the upper down frames 14 are joined to lower parts of the rear inclined portions 15a.

Front ends of a left and right pair of seat rails 16 inclined upward toward the rear are joined to rear portions of the upper down frames 14. The seat rails 16 are inclined more gently than the rear inclined portions 15a, and upper ends of the rear inclined portions 15a are joined to intermediate portions of the seat rails 16. Additionally, strut-shaped support frames 10 are provided between rear portions of the seat rails 16 and intermediate portions of the rear inclined portions 15a so as to straddle both thereof. The vehicle body frame F is mainly composed of these components, namely: head pipe 13, upper down frames 14, lower down frames 15, seat rails 16, and support frames 10.

A periphery of the vehicle body frame F is covered with a vehicle body cover 19. On an upper rear portion of the vehicle body cover 19, a tandem-type passenger seat 20 is disposed so as to be openable. An article housing box 18 capable of housing helmets and the like is disposed below the passenger seat 20 and above the power unit U.

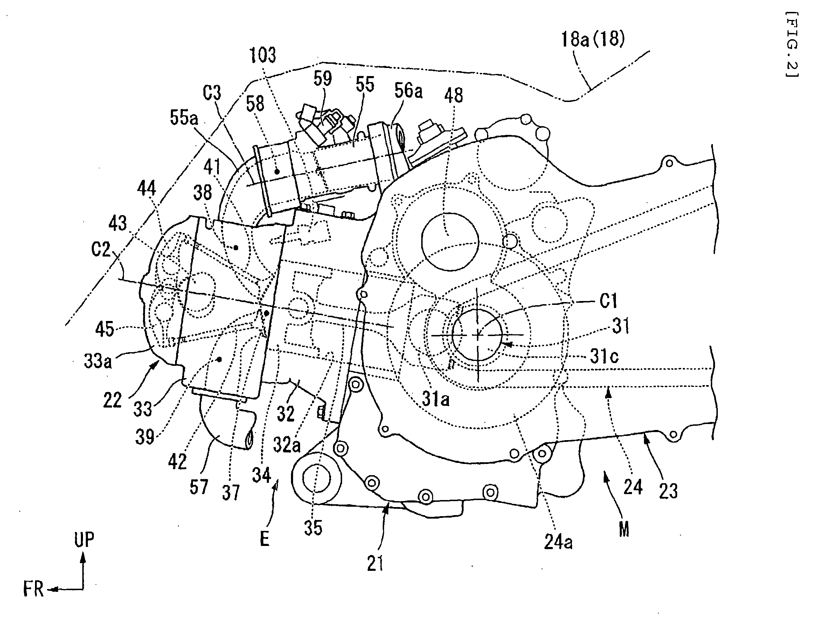

Referring to Figs. 2, 3 and 4 together, the power unit U is composed by integrally combining the engine E in a front portion thereof and a power transmission device M in a rear left side thereof.
The engine E is a water-cooled single-cylinder engine in which a rotation axis C1 of a crankshaft 31 is made to go along the right-and-left direction. The engine E is composed by protruding a cylinder portion 22 forward from a front end portion of a crankcase 21 substantially horizontally (specifically, while inclining the cylinder portion 22 slightly upward toward a front). Descriptions will be made below while defining an axis along a protruding direction of the cylinder portion 22 as a cylinder axis C2.

The crankcase 21 is composed to be divided into left and right case halves 21a and 21b. A left case body 23a projected leftward from a rear left side of the left case half 21a of the crankcase 21 and then extended toward the rear is formed integrally with the left case half 21a. The left case body 23a composes a transmission case 23 in the power transmission device M together with a left case cover 23b attached to a left side of the left case body 23a. A right case cover 21c is attached to a right side portion of the crankcase 21. Note that reference numeral 21d denotes a pump cover attached to a right outside portion of the right case cover 21c, reference numeral 62 denotes an oil filter attached to a right outside portion of the pump cover 21d, and reference numeral 54 denotes an oil cooler attached to a front end portion of the right case cover 21c.

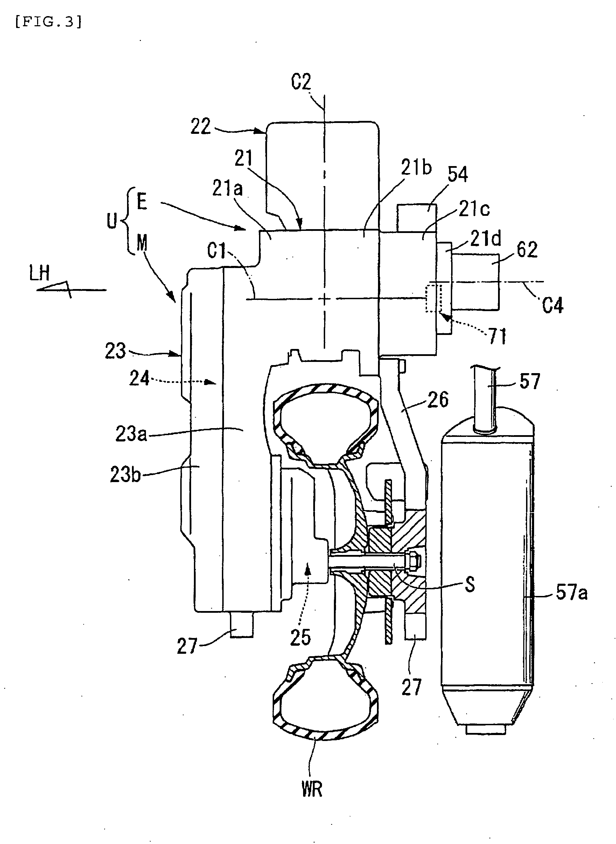

The power transmission device M is composed by including a belt-type continuously variable transmission mechanism 24 (refer to Fig. 1) formed by winding an endless belt around front and rear pulleys, and a gear-type reduction mechanism 25 (refer to Fig. 3) that reduces an output of the belt-type continuously variable transmission mechanism 24 and outputs the reduced output to a rear output shaft (axle shaft S). The belt-type continuously variable transmission mechanism 24 is housed in the transmission case 23 across the fore and aft direction, and the gear-type reduction mechanism 25 is housed in a rear inside of the transmission case 23. The rear wheel WR is attached to the axle shaft S protruding to a rear right side of the transmission case 23.

Onto a rear right side of the right case half 21b of the crankcase 21, a front end portion of an assist arm 26 that is extended fore and aft and supports a right end portion of the axle shaft S is attached (refer to Fig. 3). This assist arm 26 and the transmission case 23 become left and right arms that support the rear wheel WR, and the entirety of the power unit U is vertically swingable together with the rear wheel WR. Onto each rear end portion of the transmission case 23 and the assist arm 26, a unit-side cushion coupling portion 27 is provided. The unit-side cushion coupling portions 27 axially support lower end portions of the left and right rear cushions 7. An Upper end portion of each of the rear cushions 7 is axially supported on a vehicle body-side cushion coupling portion 17 on rear end portions of the left and right seat rails 16.

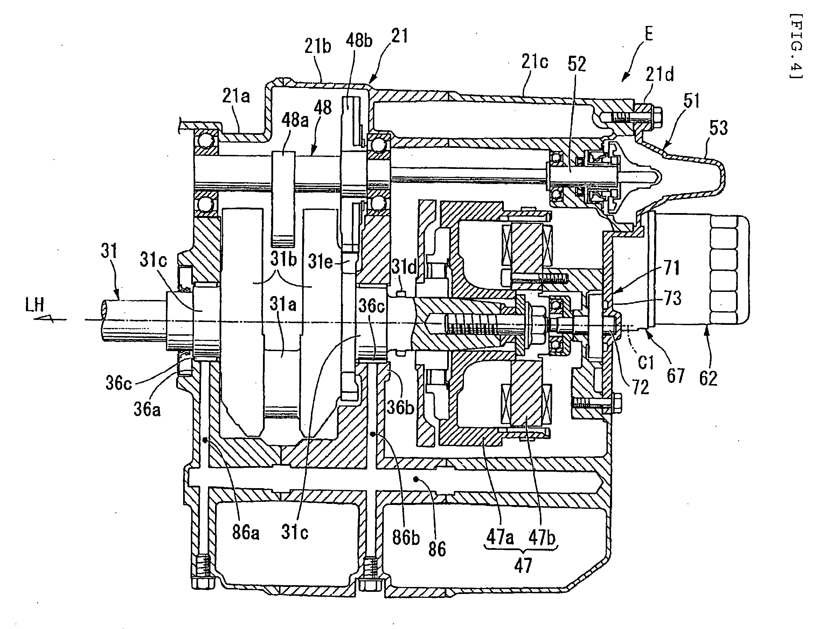

Referring to Fig. 2, the cylinder portion 22 is mainly composed of a cylinder block 32 attached to a front end portion of the crankcase 21, a cylinder head 33 attached to a front end portion of the cylinder block 32, and a head cover 33a attached to a front end portion of the cylinder head 33.
A cylinder bore 32a that goes along the cylinder axis C2 is formed in the cylinder block 32, and a piston 34 capable of moving reciprocally is fitted into the cylinder bore 32a. A small end portion of a connecting rod 35 is coupled to the piston 34, and a large end portion of the connecting rod 35 is coupled to a crank pin 31a of the crankshaft 31. The crankshaft 31 includes left and right journals 31c on still outer parts of left and right crank webs 31b which support the crank pin 31a, and the left and right journals 31c are capable of rotating freely supported on left and right bearing portions 36a and 36b of the crankcase 21 with metal bearings 36c interposed therebetween (refer to Fig. 4).

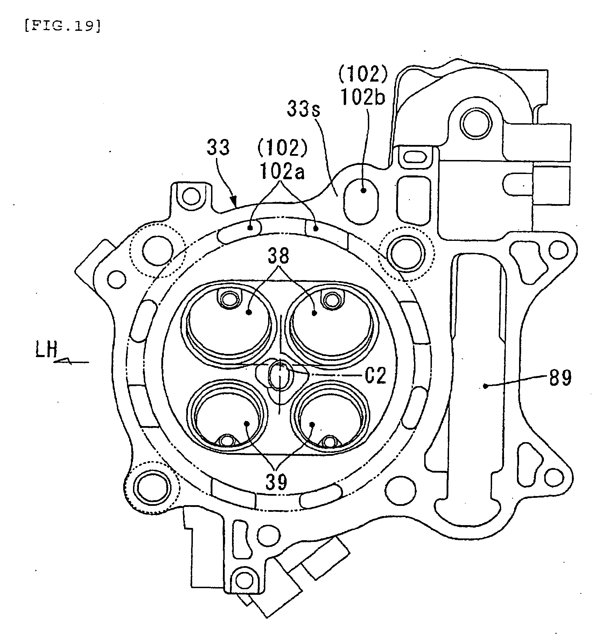

The cylinder head 33 closes a front end opening of the cylinder bore 32a, and forms a combustion chamber 37 together with the piston 34 located at a top dead center. Here, the engine E is of an OHC four-valve type. In a roof-forming portion of the combustion chamber 37, two downstream-side openings of intake ports 38 and two upstream-side openings of exhaust ports 39 are formed (refer to Fig. 19). The respective openings are individually opened and closed by intake valves 41 and exhaust valves 42.

Stems of the valves 41 and 42 form a V shape when viewed from aside, and are extended toward the front. A single camshaft 43 is disposed between the stems, and the camshaft 43 is rotationally driven together with the crankshaft 31 via a cam chain (not shown). By such a rotational movement of the camshaft 43, intake-side or exhaust-side locker arms 44 or 45 disposed between the camshaft 43 and upper ends of the stems of each of the valves 41 or 42 are made to swing. Then, these locker arms 44 and 45 reciprocally move the corresponding valves 41 and 42, thereby opening the openings of each of the ports 38 and 39 on the combustion chamber 37 side. Note that, on a right side of the right journal 31c of the crankshaft 31, there is provided a drive sprocket 31d that winds, around itself, the cam chain disposed on a right side of the cylinder portion 22 (refer to Fig. 4).

On a left end portion of the crankshaft 31, a drive pulley 24a of the belt-type continuously variable transmission mechanism 24 is disposed coaxially with the crankshaft 31. Meanwhile, referring to Fig. 4, on a right end portion of the crankshaft 31, an outer rotor 47a in a generator 47 is disposed coaxially with the crankshaft 31. The outer rotor 47a is one in a cup shape open rightward, projects rightward from a right side surface of the crankcase 21, and is disposed inside the case cover 21c that covers the right side surface of the crankcase 21. In the outer rotor 47a, a stator coil 47b supported by the right case cover 21c is disposed.

Above the crankshaft 31, a balancer shaft 48 having a different axis from the crankshaft 31 is provided. The balancer shaft 48 has a rotation axis parallel to the crankshaft 31. A driven gear 48b on a right end portion of the balancer shaft 48 is made to mesh with a drive gear 31e of the crankshaft 31, whereby the balancer shaft 48 rotates at an equal speed to that of the crankshaft 31. A balancer weight 48a located at a crosswise center of the balancer shaft 48 is provided so as to enter a space between the left and right crank webs 31b while detouring the crank pin 31a. A rotation range of the balancer weight 48a and a rotation range of the left and right crank webs 31b are partially overlapped with each other.

Here, on a right side of the balancer shaft 48, a water pump 51 for circulating a coolant in the engine E is disposed. The water pump 51 is disposed between the right case cover 21c and the pump cover 21d. A drive shaft 52 of the water pump 51 is disposed coaxially with the balancer shaft 48, and the drive shaft 52 is extended crosswise inside the crankcase 21 and connected to a right end of the balancer shaft 48. The drive shaft 52 is connected so as not to rotate relatively to the balancer shaft 48, whereby the water pump 51 is driven following rotations of the crankshaft 31 and the balancer shaft 48. A casing 53 of the water pump 51 is formed of the right case cover 21c and the pump cover 21d.

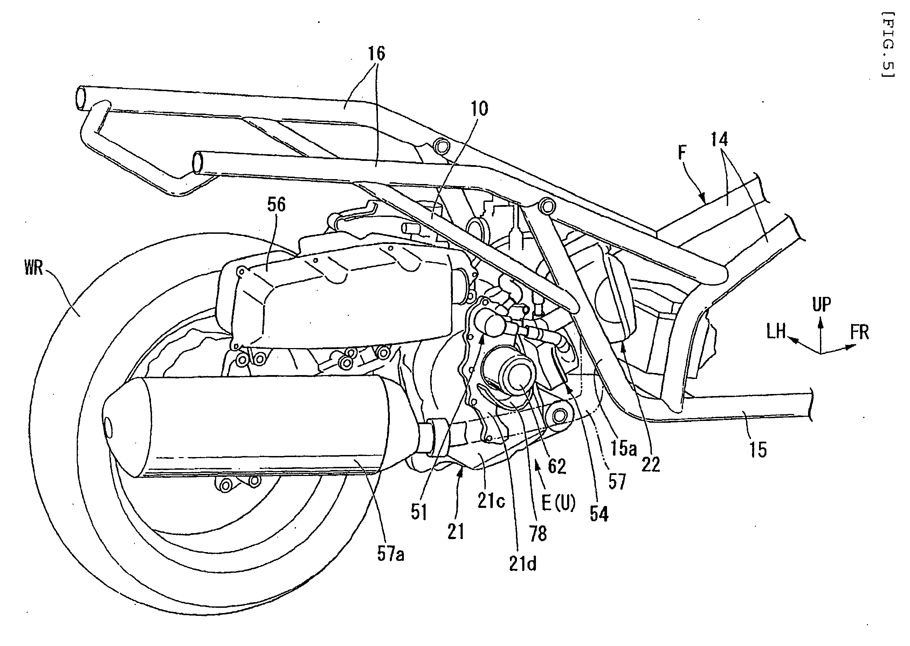

Additionally referring to Fig. 5, a region where the casing 53 is formed in the pump cover 21d protrudes outward in the right and left directions, and a plurality of hoses for flowing the coolant into and out of the engine E are connected to the periphery of the protrusion shape.
The oil cooler 54 attached to the front end portion of the right case cover 21c is of a water-cooled type using the coolant fed from the water pump 51. The oil cooler 54 is provided so as to protrude forward from the front end portion of the right case cover 21c substantially along the cylinder axis C2. Engine oil in the right case cover 21c is introduced into the oil cooler 54 from a base end side of the oil cooler 54. The oil is cooled while passing through a predetermined route, and then is returned into the right case cover 21c from the same base end side.

As shown in Figs. 1 and 2, above the cylinder portion 22 of the engine E, a throttle body 55 as one of intake parts is disposed, and front ends (downstream-side) of the throttle body 55 are connected to upstream-side openings of the intake ports 38 which are above the cylinder head 33 with insulators 55a interposed therebetween. Rightward above the power unit U and rearward of the throttle body 55, an air cleaner 56 is disposed (refer to Fig. 5). The air cleaner 56 is connected to a rear end (upstream-side) of the throttle body 55 via a connecting tube 56a. To downstream-side openings of the exhaust ports 39 disposed on a lower side of the cylinder portion 22, base ends of an exhaust pipe 57 are connected. The exhaust pipe 57 is extended rearward while being bent in the periphery of the engine E, and is connected to a silencer 57a disposed on the right side of the rear wheel WR.

Here, an intake passage 58 from the air cleaner 56 to the downstream-side openings of the intake ports 38 forms a U shape when viewed from aside, which opens toward a base end side (crankcase 21 side) of the cylinder portion 22.
Specifically, the throttle body 55 is disposed while setting an axis C3 of the intake passage 58 formed in an inside thereof substantially horizontally (specifically, inclining the axis C3 slightly upward toward the rear). The insulators 55a which connect the front ends of the throttle body 55 and the upstream-side openings of the intake ports 38 are formed so as to bend downward the intake passage 58 continuous from the throttle body 55. The intake ports 38 are formed so as to bend the intake passage 58 continuous from the insulators 55a obliquely downward toward the rear in a range from the upstream-side openings of the intake ports 38 to the downstream-side openings thereof.

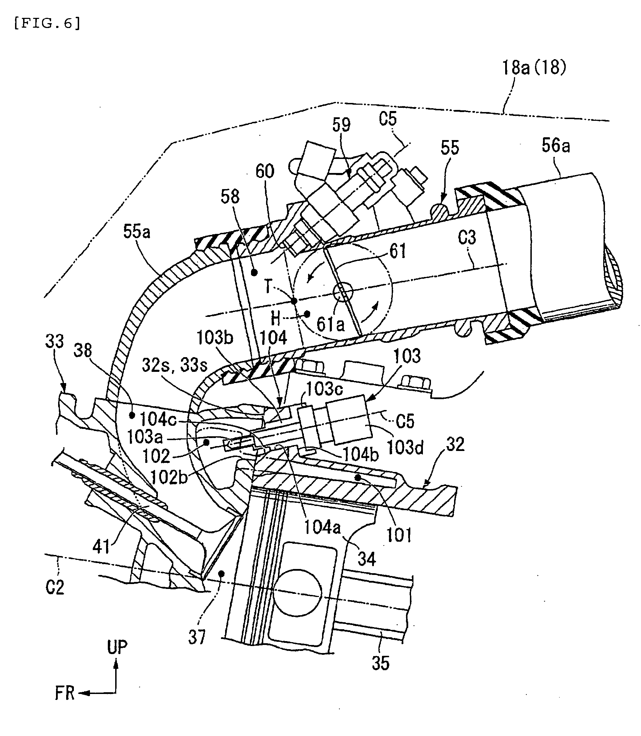

Additionally referring to Fig. 6, to the throttle body 55, an injector 59 that injects fuel into the intake passage 58 is attached integrally therewith. The injector 59 is disposed on an upper side (in other words, opposite side to the cylinder portion 22 with the intake passage 58 sandwiched therebetween) of the throttle body 55 while being inclined downward toward the front with respect to the axis C3 of the throttle body 55, and an injection port 60 at a front end of the injector 59 is made open to an upper inner wall of the throttle body 55 to be faced to an inside of the intake passage 58.

In the throttle body 55, a disc-shaped throttle valve 61 that opens and closes the intake passage 58 in the inside of the throttle body 55 is provided. The throttle valve 61 is rotatably supported on the throttle body 55 with a rotation shaft 61a that goes substantially along the crosswise direction interposed therebetween, and when the throttle is open, the throttle valve 61 rotates counterclockwise in Fig. 6 so as to move an upper portion thereof forward and a lower portion thereof rearward. Here, the injection port 60 open to the upper inner wall of the throttle body 55 in the injector 59 is located closer to the rotation shaft 61a than to an intake downstream-side end T in a range (valve rotatable range) required for the rotation of the throttle valve 61 on an intake downstream side of the rotation shaft 61a (rotation center) of the throttle valve 61.

Referring to Fig. 1, the passenger seat 20 is one in which, with respect to a driver seat 20a composing a front half thereof, a tandem passenger seat 20b composing a rear half thereof is provided to be displaced upward in a step shape. For example, the driver seat 20a and a seat back 20c on a rear end thereof rotate via a hinge (not shown), thus making it possible to access the article housing box 18 provided across the fore and aft of the passenger seat 20. A bottom wall 18a of the article housing box 18 forms a convex shape protruding upward below the driver seat 20a so as to detour the cylinder portion 22 of the engine E, the throttle body 55, and the like, whereby a clearance space is ensured for the engine E and the intake parts, which is required when the power unit U vertically swings,.

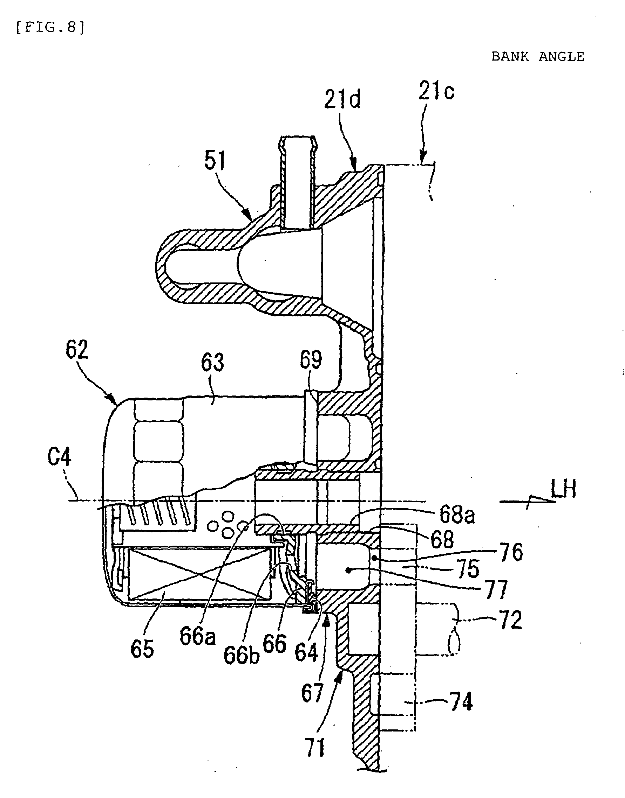

As shown in Fig. 8, the oil filter 62 attached to the right outside portion of the pump cover 21d is formed into a cartridge type composed by housing an element 65 in a case 63 of a closed-end cylindrical shape and by closing an opening of the case 63 by using a disc-like set plate 66. A center axis (center axis of the case 63 and the set plate 66) of the oil filter 62 will be hereafter defined as an axis C4. The oil filter 62 is attached to the pump cover 21d so that the axis C4 can be made to go along the crosswise direction, and that an opening side end (base end) of the case 63 can be opposed to the right outside portion of the pump cover 21d and can protrude rightward from the right outside portion.

On a center portion of the set plate 66, an oil outflow port 66a is formed, and in the periphery of the oil outflow port 66a, a plurality of oil inflow ports 66b are formed so as to array on a circumference in a plan view of the plate (viewed in the crosswise direction). Specifically, the oil filter 62 flows the oil thereinto from each of the oil inflow ports 66b on the opening side end of the case 63 of the oil filter 62, passes the oil from an outside of the element 65 to an inside thereof to filter the oil, and thereafter, flows the oil out of the oil outflow port 66a on the same opening side end of the case 63.

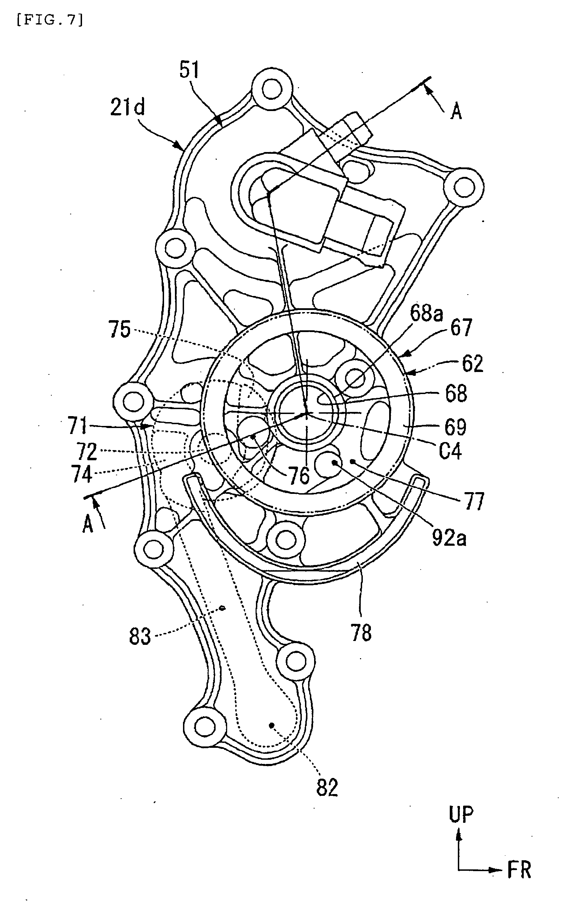

Additionally referring to Fig. 7, on the right outside portion of the pump cover 21d, a holder portion 67 for attaching the oil filter 62 thereto is provided. The holder portion 67 is one of a circular pedestal shape, which is substantially coaxial with the oil filter 62. On a center of the holder portion 67, a communication hole 68 opposite to the oil outflow port 66a of the oil filter 62 is formed, and from the communication hole 68, a nozzle 68a is protruded outward in the right side. A screw thread on an outer circumference of the nozzle 68a and a screw thread on an inner circumference of the oil outflow port 66a are made to mesh with each other to be tightened together, whereby the oil filter 62 is attached to the holder portion 67 so as to be attachable thereto and detachable therefrom, and the nozzle 68a, the communication hole 68, and the oil outflow port 66a communicate with one another. In this case, a seal 64 on an outer circumference of the opening side end of the case 63 is brought into intimate contact with a seal surface 69 on an outer circumference of a right outside of the holder portion 67, whereby the oil filter 62 and the holder portion 67 are oil tightly sealed.

Here, additionally referring to Fig. 4, an oil pump 71 for supplying the engine oil to each of the portions in the engine E is disposed between the pump cover 21d and the right case cover 21c. The oil pump 71 is located rightward of the crankshaft 31, a drive shaft 72 of the oil pump 71 is disposed coaxially with the journals 31c of the crankshaft 31. A left end of the drive shaft 72 is connected to a right end of the crankshaft 31 so as not to rotate relatively to the crankshaft 31. Thus, the oil pump 71 is driven following the rotation of the crankshaft 31. A casing 73 of the oil pump 71 is formed of the pump cover 21d and the right case cover 21c.

The oil pump 71 is one of a trochoid type, and is composed by arranging an outer rotor and an inner rotor in the casing 73 of a circular shape when viewed from aside. On an approximate center of the casing 73, the drive shaft 72 is disposed, and on an outer circumferential portion of the casing 73, there are arranged an oil suction port 74 for inducing the oil into the casing 73, and an oil ejection port 75 for inducing the oil out of the casing 73. The oil passage of the right case cover 21c communicates with the oil suction port 74, and an oil groove 77 of the holder portion 67 communicates with the oil ejection port 75 through an oil inlet portion 76. The oil groove 77 is provided in an annular shape so as to surround the periphery of the communication hole 68 on the right outer side of the holder portion 67. The oil inlet portion 76 is formed in a region opposite to the oil ejection port 75 in the crosswise direction on a front side of the bottom portion of the oil groove 77.

The drive shaft 72 of the oil pump 71 is provided so as to be offset obliquely downward toward the rear with respect to an axis position of the oil filter 62, and to be overlapped with the seal surface 69 of the holder portion 67 when viewed from aside. The oil inlet portion 76 is provided between the drive shaft 72 and the axis position of the oil filter 62. The oil inlet portion 76 and the oil ejection port 75 are arranged so as to be opposed to the oil inflow ports 66b of the oil filter 62 attached to the holder portion 67, and communicate with the oil inlet ports 66b through the oil groove 77. In such a way, a length of an oil passage from the oil pump 71 to the oil filter 62 is suppressed to the minimum.

As shown in Figs. 5 and 7, on a right outer side of the pump cover 21d, a protection wall 78 that covers a lower outer circumference of the oil filter 62, attached to the holder portion 67 from the below is formed integrally therewith. The protection wall 78 forms an arc shape open to the above when viewed from aside, and is formed into a semi-cylindrical shape extended rightward from a side surface of the pump cover 21d. An inner circumferential surface of the protection wall 78 is spaced by a predetermined amount from an outer circumferential surface of the oil filter 62. Moreover, a height of a rightward extension of the protection wall 78 is set lower than a height of a rightward extension of the oil filter 62.

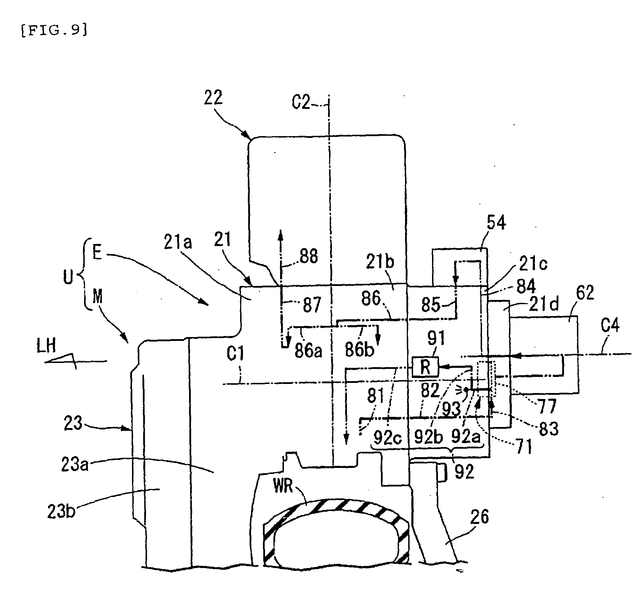

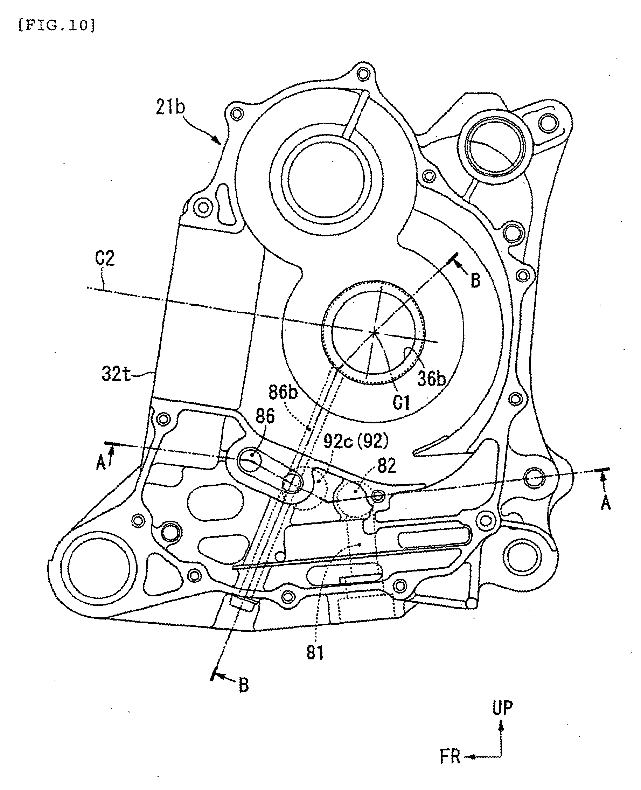

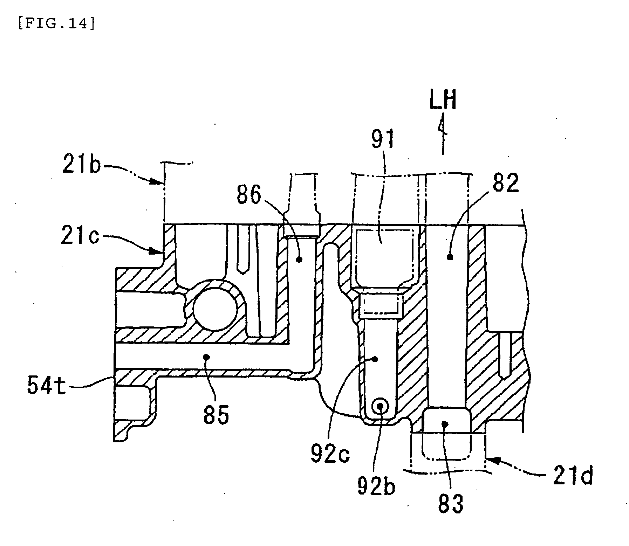

Next, descriptions will be made of a flow passage of the oil in the engine E with reference to Fig. 9.
First, referring to Figs. 10, 11, 13 and 14 together, when the oil pump 71 is driven following the rotation of the crankshaft 31, the engine oil reserved in a lower portion of the crankcase 21 is sucked from the oil suction port 74 of the oil pump 71 into the oil pump 71 through: a first oil passage 81 extended upward from the lower portion of the crankcase 21 in the right case half 21b; a second oil passage 82 extended rightward from an upper end portion of the first oil passage 81 so as to straddle the right case half 21b and the right case cover 21c; and a third oil passage 83 extended upward from a right end portion of the second oil passage, in a space between the right case cover 21c and the pump cover 21d.

Subsequently, additionally referring to Fig. 7, the oil discharged from the oil ejection port 75 of the oil pump 71 and ejected into the oil groove 77 of the holder portion 67 through the oil inlet portion 76, is directly introduced into the oil inflow ports 66b of the oil filter 62 through the oil groove 77. Then, the oil that has passed through the oil filter 62 and has been filtered is guided out of an oil outflow passage of the oil filter 62, and is fed into a fourth oil passage 84 in the right case cover 21c through the nozzle 68a and the communication hole 68.

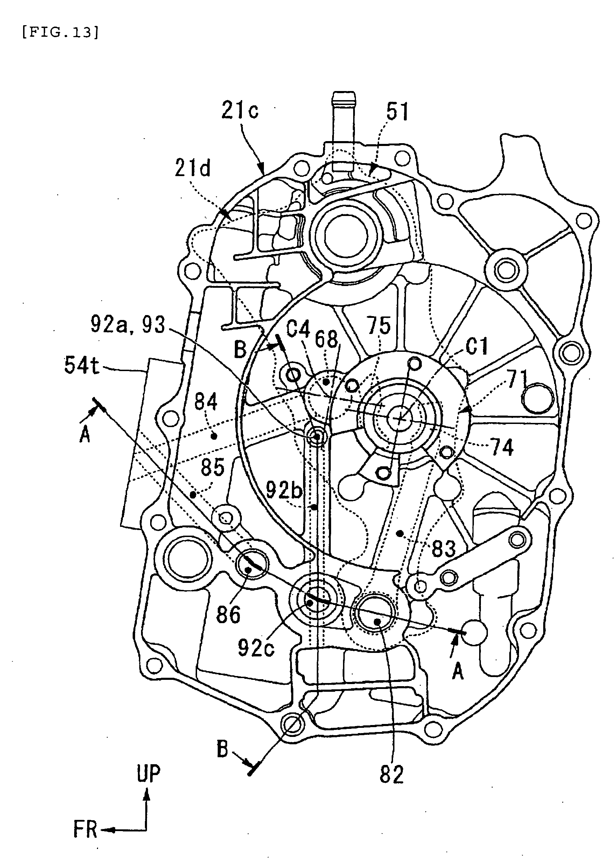

Referring to Fig. 13, the fourth oil passage 84 is extended obliquely downward toward the front from a rear end portion of the fourth oil passage 84, which is opposed to the communication hole 68, and reaches an attachment portion 54t for the oil cooler 54, which is located on the front end portion of the right case cover 21c. The oil in the fourth oil passage 84 is introduced from the attachment portion 54t into the oil cooler 54, passes through the oil cooler 54 to be cooled there, and is then fed into a fifth oil passage 85 in the right case cover 21c. The fifth oil passage 85 is extended obliquely downward toward the rear from the attachment portion 54t. The oil in the fifth oil passage 85 is fed into a sixth oil passage 86 from a rear end portion of the fifth oil passage 85.

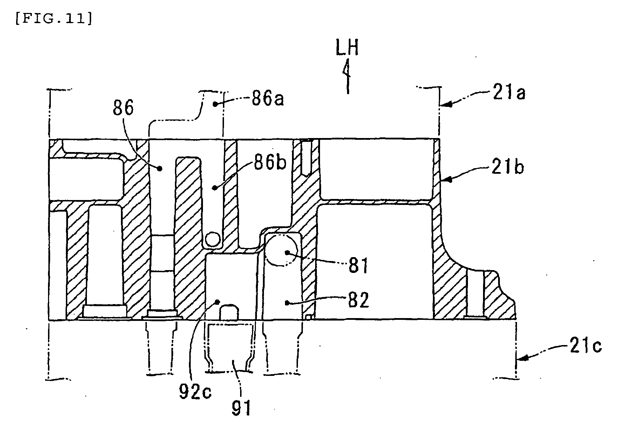

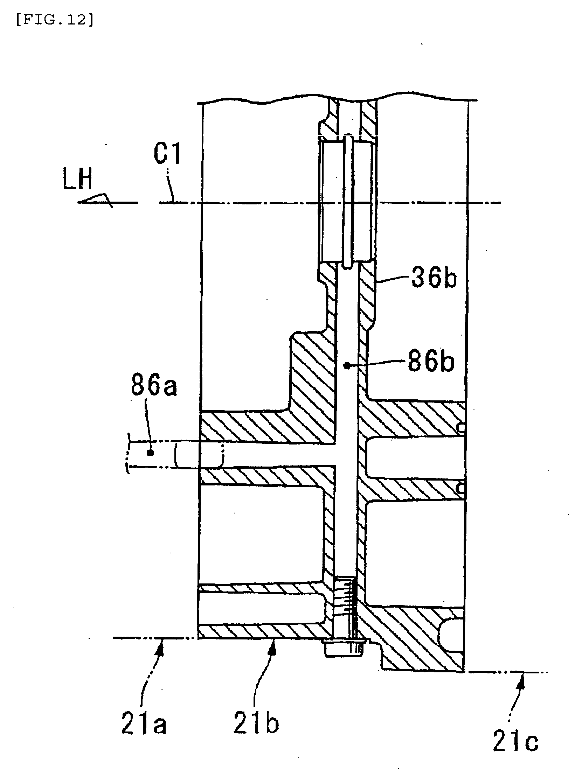

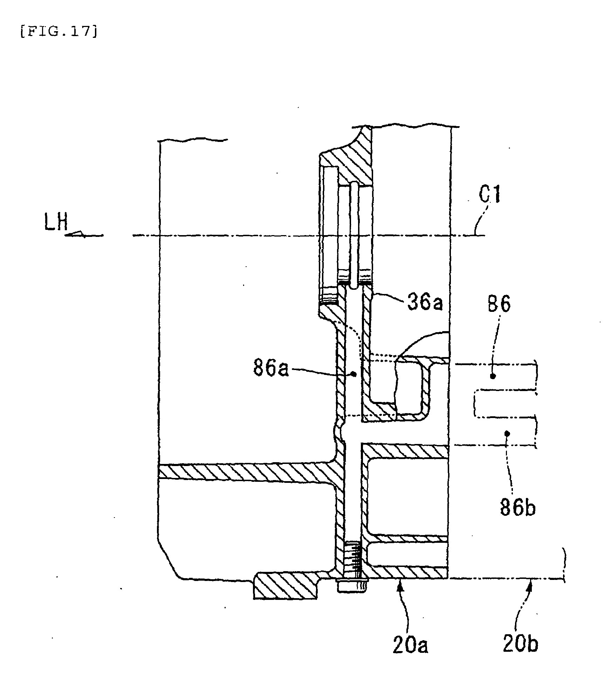

Referring to Figs. 11, 12, 14, 16 and 17, the sixth oil passage 86 is extended leftward from the rear end portion of the fifth oil passage 85 so as to straddle the right case cover 21c and the right case half 21b. A left end portion of the sixth oil passage 86 reaches a matching surface of the left and right case halves 21a and 21b. From the left end portion, there are formed left and right bearing oil passages 86a and 86b extended left and right at a position offset rearward with respect to the sixth oil passage 86 which are then bent and extended upward.

The left and right bearing oil passages 86a and 86b reach the left and right bearing portions 36a and 36b in the left and right case halves 21a and 21b, respectively. The oil in the sixth oil passage 86 is supplied to sliding surfaces of the metal bearings 36c of the left and right bearing portions 36a and 36b with the crankshaft 31 through these left and right bearing oil passages 86a and 86b. The oil supplied to the left and right bearing portions 36a and 36b is returned to the lower portion of the crankcase 21 by naturally dripping, and so forth. Then, the oil is repeatedly circulated in the engine E through the above-described route.

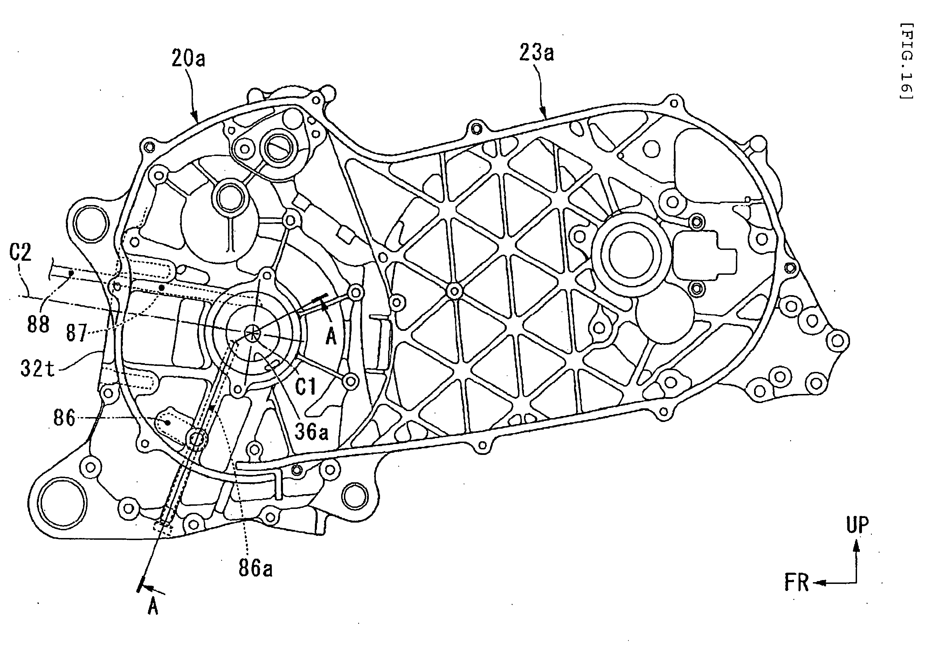

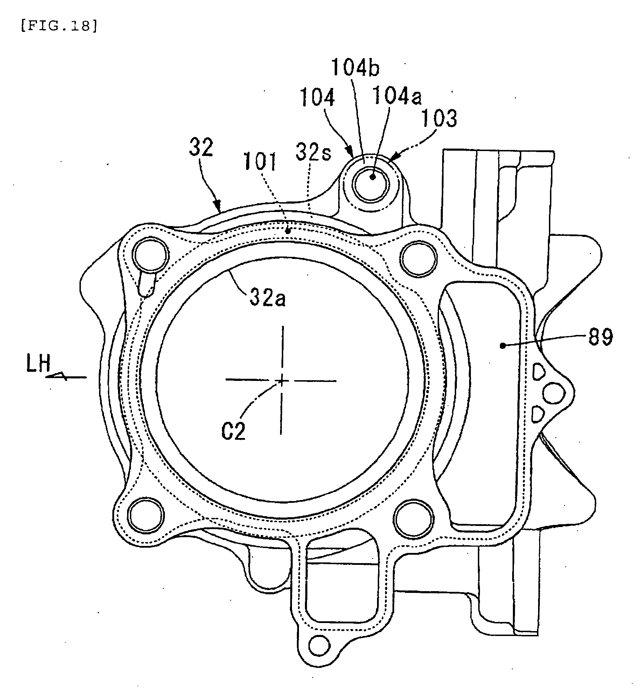

Referring to FIG. 16, a part of the oil supplied to the left bearing portion 36a is supplied to valve mechanisms in the cylinder head 33, such as the respective valves 41 and 42, the locker arms 44 and 45, and the camshaft 43. The oil is supplied through a seventh oil passage 87 extended forward from the left bearing portion 36a in the left case half 21a to reach an attachment portion 32t for the cylinder block 32, and to flow through an eighth oil passage 88 extended so as to go along the cylinder axis C2 on the left side of the cylinder portion 22. The oil supplied into the cylinder head 33 is returned to the lower portion of the crankcase 21 through a cam chain chamber 89 (refer to Figs. 18 and 19) on the right side of the cylinder portion 22. Note that the inside of the crankcase 21 and the inside of the transmission case 23 are oil tightly partitioned, and the oil is not supplied into the transmission case 23.

In the above-described circulation of the oil, for example, when the engine E rotates at a high speed, an oil pressure in the oil passage is increased, and when the oil pressure reaches a predetermined value, a relief valve 91 placed in the right case cover 21c operates, then returns a part of the oil ejected by the oil pump 71 to the lower portion of the crankcase 21, and thereby adjusts the oil pressure.

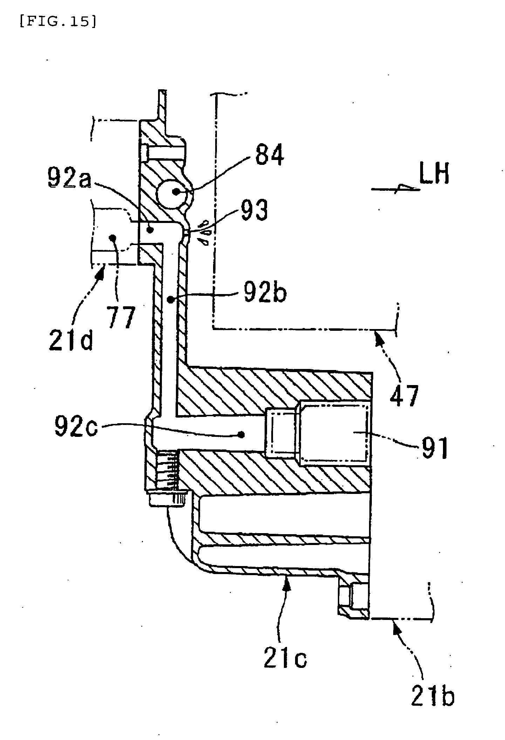

Referring to Figs. 7, 8, 13 and 15, from a lower side of the bottom portion of the oil groove 77 of the pump cover 21d, a first relief passage 92a is extended leftward so as to straddle the pump cover 21d and the right case cover 21c. From a left end portion of the first relief passage 92a, a second relief passage 92b is extended downward in the right case cover 21c. From a lower end portion of the second relief passage 92b, a third relief passage 92c is extended leftward so as to straddle the right case cover 21c and the right case half 21b. The relief valve 91 is disposed in the third relief passage 92c. The third relief passage 92c is bent downward on a downstream side of the relief valve 91, and reaches the lower portion of the crankcase 21.

A relief passage 92 composed of the respective relief passages 92a, 92b and 92c is directly branched from the respective oil inflow ports 66b of the oil filter 62 and the oil inlet portion 76 of the oil pump 71. Moreover, on a left end of the first relief passage 92a in the relief passage 92, an oil jet port 93 is provided for jetting the oil in the first relief passage 92a to the generator 47 disposed inside the right case cover 21c. The oil is jetted from the oil jet port concerned, whereby the generator 47 is appropriately cooled. In this case, a length of the oil passage from the oil pump 71 to the oil jet port 93 is short, and the oil is jetted in a relatively high oil pressure due to the position before the relief valve 91, thus making it possible to spray the oil onto the generator 47 effectively. Note that the oil jetted from the oil jet port 93 is returned to the lower portion of the crankcase 21 by the naturally dripping, and so forth.

Next, a description will be made of a periphery of water jackets of the cylinder portion 22 with reference to Figs. 6, 18 and 19.
On the cylinder block 32, a cylinder-side water jacket 101 is formed so as to surround an outer circumference of the cylinder bore 32a, and on the cylinder head 33, a head-side water jacket 102 is formed so as to surround peripheries of each of the valves 41 and 42. The cylinder-side water jacket 101 annularly opens to the cylinder head 33 side on a matching surface 32s of the cylinder block 32 with the cylinder head 33. Meanwhile, on a matching surface 33s of the cylinder head 33 with the cylinder block 32, a plurality of cylinder-side openings 102a of the head-side water jacket 102 are formed on a circumference of the cylinder axis C2 as a center. Both of the matching surfaces 32s and 33s are brought into intimate contact with each other with a predetermined gasket interposed therebetween, whereby both of the water jackets 101 and 102 communicate with each other, thus making it possible to flow the coolant therebetween.

Here, for example, to a right side of an upper wall of the cylinder block 32, a coolant temperature sensor 103 that detects a temperature of the coolant in the cylinder head 33 is attached. The coolant temperature sensor 103 is attached to a sensor attachment portion 104 formed in the vicinity of the matching surface 32s of the cylinder block 32 so as to be inserted from the base end side (crankcase 21 side) of the cylinder portion 22. An axis (hereinafter, referred to as a sensor axis) C5 that goes along an insertion direction of the coolant temperature sensor 103 is inclined with respect to the cylinder axis C2 so as to approach the inside of the cylinder as approaching the cylinder head 33. Moreover, an inclination angle of the sensor axis C5 with respect to the cylinder axis C2 is made acute.

A tip end side of the temperature sensor in the insertion direction is defined as a pin-like detection portion 103a that goes along the sensor axis C5, and a thermistor is built in the detection portion 103a. A shaft portion 103b of a relatively large diameter, which goes along the sensor axis C5, continues with a base end side of the detection portion 103a, and a diameter-expanded portion 103c is provided on a base end side of the shaft portion 103b. Moreover, on the diameter-expanded portion 103c, a connector 103d that protrudes to the crankcase 21 side so as to go along the sensor axis C5 is held integrally therewith.

The sensor attachment portion 104 forms a sensor insertion hole 104a that goes along the sensor axis C5, and a sensor-attachment seating surface 104b orthogonal to the sensor axis C5. A screw thread on an outer circumference of the shaft portion 103b is made to mesh with a screw thread on an inner circumference of the sensor insertion hole 104a, and a tip end surface of the diameter-expanded portion 103c is brought into intimate contact with the attachment seating surface 104b. Accordingly, the temperature sensor is fixed to the sensor attachment portion 104. Here, the coolant temperature sensor 103 is disposed in a dead space between the cylinder block 32 and the, the throttle body 55 located immediately above the coolant temperature sensor 103, the coolant temperature sensor 103 disposed adjacently to the cylinder-side water jacket 101. Here, the axis C3 of the intake passage 58 in the throttle body 55 and the sensor axis C5 of the coolant temperature sensor 103 are set substantially parallel to each other.

A surface of the sensor attachment portion 104 on the cylinder head 33 side composes a part of the matching surface 32s of the cylinder block 32. Moreover, on a region of the sensor insertion hole 104a on the cylinder head 33 side, a countersunk portion 104c is formed as not to eliminate the screw thread. In addition, on the matching surface 33a of the cylinder head 33, a sensor communication hole 102b is formed so as to continue with the countersunk portion 104c. The detection portion 103a of the coolant temperature sensor 103 enters the head-side water jacket 102 through the sensor communication hole 102b, thus making it possible to directly detect the temperature of the coolant in the head-side water jacket 102. The sensor communication hole 102b and the countersunk portion 104c compose a part of the head-side water jacket 102 which straddle the cylinder head 33 and the cylinder block 32. Such a region is favorably sealed by the gasket between both of the matching surfaces 32s and 33s.

As described above, the oil passage structure in the above-described embodiment is applied to the engine E including: the crankcase 21 that supports the crankshaft 31; the right case cover 21c that covers the side of the crankshaft 21; the oil pump 71 that supplies the oil to each portion of the engine; and the oil filter 62 that has the oil inflow ports 66b and the oil outflow port 66a on the same side. The oil filter 62 is attached to the engine E so that the oil inflow ports 66b are opposed to the oil ejection port 75 of the oil pump 71.

With such a configuration, the oil passage from the oil ejection port 75 of the oil pump 71 to the oil inflow ports 66b of the oil filter 62 is formed linearly, whereby the length of the oil passage is suppressed. In this way, a resistance of the passage is reduced, thus making it possible to increase the flow rate of the oil. Moreover, since the shape of the oil passage is simplified, it is possible to reduce the number of man-hours for processing the parts.

Moreover, concerning the above-described oil passage structure, in the right case cover 21c, the relief passage 92 that opens toward the oil inflow ports 66b and reaches the relief valve 91 is provided, and between the oil pump 71 and the relief valve 91 in the relief passage 92, there is provided the oil jet port 93 that jets the oil toward the generator 47 disposed in the inside of the right case cover 21c. Consequently, a distance from the oil pump 71 to the oil jet port 93 is suppressed. In addition, the oil jet port 93 is provided on an upstream side of the relief valve 91, whereby a high oil pressure can be applied to the oil jet port 93, thus making it possible to jet the oil effectively toward the generator 47.

Furthermore, in the above-described oil passage structure, the drive shaft 72 of the oil pump 71 is directly coupled to the crankshaft 31, whereby the oil pump 71 can be directly driven by the crankshaft 31, thus making it possible to obtain a higher oil pressure.

In addition, in the above-described oil passage structure, the pump cover 21d that covers the oil pump 71 is provided. Furthermore, on the pump cover 21d, the protection wall 78 that projects so as to cover the outer circumference of the lower portion of the oil filter 62 is provided. In this way, the oil filter 62 can be protected from splashes of mud, water, and the like from the ground, and the oil can be prevented from dripping on the ground and so forth, when the oil filter 62 is detached from the pump cover 21d.

### [Description of Reference Numerals]

- 1: MOTORCYCLE (SCOOTER-TYPE VEHICLE)
- F: VEHICLE BODY FRAME
- E: ENGINE (INTERNAL COMBUSTION ENGINE)
- M: POWER TRANSMISSION DEVICE
- U: POWER UNIT (SWING UNIT)
- 21: CRANKCASE
- 21c: RIGHT CASE COVER (CRANKCASE COVER)
- 21d: PUMP COVER (OIL PUMP COVER)
- 31: CRANKSHAFT
- 47: GENERATOR
- 62: OIL FILTER
- 66a: OIL OUTFLOW PORT
- 66b: OIL INFLOW PORT
- 71: OIL PUMP
- 72: DRIVE SHAFT
- 75: OIL EJECTION PORT
- 78: PROTECTION WALL
- 91: RELIEF VALVE
- 92: RELIEF PASSAGE
- 93: OIL JET PORT

## Claims

1. An oil passage structure of an internal combustion engine (E), comprising:
a crankcase (21) that supports a crankshaft (31);
a crankcase (21) cover that covers a side of the crankshaft (31);
an oil pump (71) that supplies oil to various portions of the engine (E); and
an oil filter (62) that includes an oil inflow port (66b) and an oil outflow port (66a) on the same side,
wherein the oil filter (62) is attached to the engine (E) so that the oil inflow port (66b) of the oil filter (62) can be opposed to an oil ejection port (75) of the oil pump (71), **characterized in that**
a relief passage (92) that opens toward the oil inflow port (66b) and reaches a relief valve (91) is provided in the crankcase cover (21c), and an oil jet port (93) that jets the oil toward a generator (47) disposed inside the crankcase cover (21c) is provided between the oil pump (71) and the relief valve (91) in the relief passage (92).

2. The oil passage structure of an internal combustion engine (E) according to claim 1, wherein a drive shaft (72) of the oil pump (71) is directly coupled to the crankshaft (31).

3. The oil passage structure of an internal combustion engine according to any one of claims 1 or 2, further comprising:
an oil pump cover (21d) that covers the oil pump (71), wherein a protection wall (78) that projects so as to cover at least an outer circumference of a lower portion of the oil filter (62) is provided on the oil pump cover (21d).

## Patentansprüche

1. Ölkanalaufbau eines Verbrennungsmotors (E), mit:
einem Kurbelgehäuse (21), das eine Kurbelwelle (31) trägt;
einer Abdeckung des Kurbelgehäuses (21), die eine Seite der Kurbelwelle (31) abdeckt;
einer Ölpumpe (71), die verschiedene Abschnitte des Motors (E) mit Öl versorgt; und
einem Ölfilter (62), der eine Ölzulauföffnung (66b) und eine Ölablauföffnung (66a) auf derselben Seite aufweist,
wobei der Ölfilter (62) an dem Motor (E) derart angebracht ist, dass die Ölzulauföffnung (66b) des Ölfilters (62) einer Ölausstoßöffnung (75) der Ölpumpe (71) gegenüber liegen kann,
**dadurch gekennzeichnet, dass**
ein Entlastungskanal (92), der sich in Richtung der Ölzulauföffnung (66b) öffnet und zu einem Entlastungsventil (91) gelangt, in der Kurbelgehäuseabdeckung (21c) vorgesehen ist, und eine Ölausstoßöffnung (93), die das Öl in Richtung eines im Inneren der Kurbelgehäuseabdeckung (21c) angeordneten Generators (47) ausstößt, zwischen der Ölpumpe (71) und dem Entlastungsventil (91) in dem Entlastungskanal (92) vorgesehen ist.

2. Ölkanalaufbau eines Verbrennungsmotors (E) gemäß Anspruch 1, wobei eine Antriebswelle (72) der Ölpumpe (71) direkt mit der Kurbelwelle (31) gekoppelt ist.

3. Ölkanalaufbau eines Verbrennungsmotors gemäß einem der Ansprüche 1 oder 2, weiterhin mit:
einer Ölpumpenabdeckung (21d), die die Ölpumpe (71) abdeckt, wobei eine Schutzwand (78) auf der Ölpumpenabdeckung (21d) vorgesehen ist, die zur Abdeckung von mindestens einem Außenumfang eines unteren Abschnitts des Ölfilters (62) hervorsteht.

## Revendications

1. Structure de passage d'huile d'un moteur à combustion interne (E), comprenant :
un carter de vilebrequin (21) qui supporte un vilebrequin (31) ;
un couvercle de carter de vilebrequin (21) qui recouvre un côté du vilebrequin (31) ;
une pompe à huile (71) qui fournit en huile différentes parties du moteur (E) ; et
un filtre à huile (62) qui comprend un orifice d'entrée d'huile (66b) et un orifice de sortie d'huile (66a) du même côté,
dans laquelle le filtre à huile (62) est fixé sur le moteur (E) de sorte que l'orifice d'entrée d'huile (66b) du filtre à huile (62) peut être opposé à un orifice d'éjection d'huile (75) de la pompe à huile (71), **caractérisée en ce que** :
un passage de décharge (92) qui débouche vers l'orifice d'entrée d'huile (66b) et atteint une soupape de décharge (91), est agencé dans le couvercle de carter de vilebrequin (21c), et un orifice de jet d'huile (93) qui éjecte l'huile vers un générateur (47) disposé à l'intérieur du couvercle de carter de vilebrequin (21c), est agencé entre la pompe à huile (71) et la soupape de décharge (91) dans le passage de décharge (92).

2. Structure de passage d'huile d'un moteur à combustion interne (E) selon la revendication 1, dans laquelle un arbre d'entraînement (72) de la pompe à huile (71) est directement couplé au vilebrequin (31).

3. Structure de passage d'huile d'un moteur à combustion interne selon l'une quelconque des revendications 1 ou 2, comprenant en outré :
un couvercle de pompe à huile (21d) qui recouvre la pompe à huile (71), dans laquelle une paroi de protection (78) qui fait saillie afin de recouvrir au moins une circonférence externe d'une partie inférieure du filtre à huile (62) est prévue sur le couvercle de pompe à huile (21d).
